(19) Europäisches Patentamt
European Patent Office
Office européen des brevets

(11) **EP 2 149 070 B1**

(12) **EUROPÄISCHE PATENTSCHRIFT**

(45) Veröffentlichungstag und Bekanntmachung des Hinweises auf die Patenterteilung:
**11.04.2018 Patentblatt 2018/15**

(21) Anmeldenummer: **08749935.6**

(22) Anmeldetag: **30.04.2008**

(51) Int Cl.:
*G02F 1/11* *(2006.01)*    *G02B 21/00* *(2006.01)*

(86) Internationale Anmeldenummer:
**PCT/EP2008/055355**

(87) Internationale Veröffentlichungsnummer:
**WO 2008/141903 (27.11.2008 Gazette 2008/48)**

(54) **DURCHSTIMMBARES AKUSTO-OPTISCHES FILTERELEMENT**

VARIABLE ACOUSTO-OPTICAL FILTER ELEMENT

ÉLÉMENT FILTRANT ACOUSTO-OPTIQUE AJUSTABLE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **22.05.2007 DE 102007024075**

(43) Veröffentlichungstag der Anmeldung:
**03.02.2010 Patentblatt 2010/05**

(73) Patentinhaber: **Leica Microsystems CMS GmbH
35578 Wetzlar (DE)**

(72) Erfinder:
• **GUGEL, Hilmar
69221 Dossenheim (DE)**

• **SEYFRIED, Volker
69226 Nussloch (DE)**

(74) Vertreter: **Hassenbürger, Anneliese
Leica Microsystems GmbH
Corporate Patents + Trademarks Department
Ernst-Leitz-Strasse 17-37
35578 Wetzlar (DE)**

(56) Entgegenhaltungen:
**EP-B- 1 141 763        WO-A-97/30371
JP-A- 2003 065 850    US-A- 4 084 182
US-A- 5 377 003**

## Beschreibung

### Gebiet der Erfindung

Die Erfindung betrifft ein akusto-optisches Filterelement gemäß dem Oberbegriff des Anspruchs 1. Weiterhin betrifft die Erfindung eine einstellbare Lichtquelle, welche ein akusto-optisches Filterelement gemäß der Erfindung umfasst, sowie ein Mikroskop zur Aufnahme von Bildinformationen einer Probe, welches eine erfindungsgemäße einstellbare Lichtquelle umfasst. Weiterhin betrifft die Erfindung einen akusto-optischen Strahlteiler, welcher ein akusto-optisches Filterelement gemäß der Erfindung umfasst.

### Stand der Technik

Aus den Naturwissenschaften, der Technik und der Medizin sind Mikroskope zur Aufnahme von Bildinformationen von Proben verschiedener Arten in zahlreichen technischen Ausführungsformen bekannt. Dabei werden zunehmend kohärente Lichtquellen eingesetzt, welche beispielsweise einen oder mehrere Laser als Lichtquellen zur Erzeugung von Anregungsstrahlen umfassen. Insbesondere können derartige Lasermikroskope als Scanmikroskope ausgestaltet sein.

Scanmikroskope sind in verschiedenen Varianten bekannt, welche sich beispielsweise in der Art und Erzeugung des Mikroskopstrahls unterscheiden. So können beispielsweise elektromagnetische Strahlen im optischen, infraroten oder ultravioletten Bereich des Spektrums eingesetzt werden. Weitere Unterschiede zwischen den verschiedenen Arten von Scanmikroskopen ergeben sich bei der Wechselwirkung des beziehungsweise der Mikroskopstrahlen mit der zu untersuchenden Probe. Bei der folgenden Beschreibung wird im Wesentlichen auf Fluoreszenzmikroskope Bezug genommen, bei welchen der Mikroskopstrahl beziehungsweise Anregungstrahl eine Probenfluoreszenz anregt, welche erfasst werden kann und zur Bildaufnahme genutzt werden kann. Daneben existieren jedoch zahlreiche weitere Messprinzipien, beispielsweise Messprinzipien, welche auf laserspektroskopischen Verfahren beruhen, Messprinzipien, welche auf einer Teilchenemission beruhen, oder andere Messprinzipien. Die nachfolgende Erfindung ist grundsätzlich auf alle derartigen Verfahren und Konstruktionen anwendbar, sowie auch auf andere Mikroskope, welche nicht nach dem Scan-Prinzip arbeiten.

Eine wesentliche Herausforderung bei zahlreichen bekannten Mikroskopen ist, unabhängig vom eingesetzten Verfahren, die Bereitstellung von Anregungslicht mit einer oder mehreren vorgegebenen Wellenlängen. Je nach der Art des Mikroskopieverfahrens und/oder nach der Art der Probe (zum Beispiel der Probenbeschaffenheit oder einer Anfärbung der Probe mit einem bestimmten Farbstoff) sind dabei ein oder mehrere Anregungslichtstrahlen erforderlich, welche in der Regel vorgegebene spektrale Eigenschaften aufweisen müssen.

Bei herkömmlichen Lasermikroskopen wird das Anregungslicht durch einen oder mehrere Anregungslaser bereitgestellt, wobei jedoch in der Regel lediglich ein begrenzter Wellenlängenbereich beziehungsweise eine begrenzte Auswahl an Spektrallinien zur Verfügung steht. Dies schränkt die Anwendung der Mikroskope auf bestimmte Arten von Proben, bestimmte Mikroskopieverfahren und/oder auf bestimmte Farbstoffe zum Anfärben der Probe ein. Dieses eingeschränkte Anwendungsspektrum ist in vielen Fällen unbefriedigend.

Es sind daher Mikroskope bekannt, welche als Lichtquelle kohärente Weißlichtquellen ausnutzen können. Ähnlich zu herkömmlichen Mikroskopen mit nichtkohärenten Lichtquellen, welche inkohärentes Licht mit einer breiten Wellenlängenverteilung generieren, aus welcher dann mittels wellenlängenselektiver Elemente die benötigten Spektralbereiche ausgewählt werden, verwenden auch diese Mikroskope breitbandige, kohärente Lichtquellen. Derartige Lichtquellen, die ein breites Wellenlängenspektrum aufweisen, werden häufig auch als "Weißlichtquellen" bezeichnet.

Insbesondere können mit Hilfe von speziellen optischen Elementen, wie zum Beispiel einer getaperten (das heißt strukturierten, insbesondere hinsichtlich ihres Brechungsindexes) Faser, einer mikrostrukturierten Faser (insbesondere einer photonischen Kristallfaser, PCF), einer Holey-Faser, einer photonic-band-gap-Faser (PBC) oder einer speziell dotierten Faser (zum Beispiel einer Faser mit einer Dotierung von Seltenerdmetallen oder Halbleitern), Lichtquellen durch Einkopplung von Laserstrahlung realisiert werden, deren Licht ein breites Wellenlängenspektrum aufweist. Derartige Weißlichtlaser werden häufig auch als Weißlichtlaser mit Superkontinuum bezeichnet. Beispiele derartiger breitbandiger Weißlichtlaser sind in DE 101 15 488 A1, in DE 101 15 509 A1 oder in DE 101 15 488 A1 aufgeführt. Die nachfolgend beschriebene Erfindung baut auf diesen Weißlichtlasern auf, ist jedoch auch für den Einsatz anderer kohärenter, breitbandiger Lichtquellen einsetzbar.

Aus dem von den Weißlichtlasern oder Breitband-Lichtquellen erzeugten breitbandigen kohärenten Licht kann anschießend mit Hilfe wellenlängenselektiver Elemente eine bestimmte Wellenlänge oder ein bestimmter Spektralbereich ausgewählt werden. Verschiedene derartiger wellenlängenselektiver Elemente sind seit langem bekannt, wie beispielsweise Prismen oder Gitter.

Seit einigen Jahren kommen jedoch zunehmend wellenlängenselektive Elemente zum Einsatz, welche auf dem akusto-optischen Effekt basieren (akusto-optische Elemente). Derartige akusto-optische Elemente weisen in der Regel einen so genannten akusto-optischen Kristall auf (zum Beispiel einen Tellurdioxid-Kristall, $TeO_2$), welcher mit entsprechender Kristallrichtung geschnitten ist. An diesem akusto-optischen Kristall sind ein oder mehrere akustische Signalgeber angeordnet, welche auch als "Transducer" bezeichnet werden. In der Regel weist ein derartiger Transducer ein piezoelektrisches Material sowie zwei oder mehrere dieses Material kontaktierende Elektroden auf. Durch elektrisches Beschalten der Elektroden mit Radiofrequenzen, die typischerweise im Bereich zwischen 30 MHz und 800 MHz liegen, wird das piezoelektrische Material zum Schwingen angeregt, so dass eine akustische Welle entstehen kann, die den Kristall durchläuft. Meist wird diese akustische Welle nach Durchlaufen eines optischen Wechselwirkungsgebiets an der gegenüberliegenden Kristallseite absorbiert oder reflektiert. Akusto-optische Kristalle zeichnen sich dadurch aus, dass die entstehende Schallwelle die optischen Eigenschaften des Kristalls verändert, wobei durch den Schall ein optisches Gitter oder eine vergleichbare optisch aktive Struktur (Hologramm) induziert wird. Durch den Kristall tretendes Licht kann schließlich an diesem optischen Gitter eine Beugung erfahren und in verschiedene Beugungsordnungen oder Beugungsrichtungen gelenkt werden.

Bei den akusto-optischen Bauteilen unterscheidet man zwischen Bauteilen, die das gesamte einfallende Licht mehr oder weniger unabhängig von der Wellenlänge beeinflussen (zum Beispiel akusto-optischen Modulatoren) und Bauteilen, die (zum Beispiel abhängig von der eingestrahlten Radiofrequenz) selektiv auf einzelne Wellenlängen wirken (akusto-optische Filter, englisch acusto-optic tunable filter, AOTF). In vielen Fällen weisen die akusto-optischen Elemente doppelbrechende Kristalle, wie beispielsweise das erwähnte Tellurdioxid auf, wobei dann unter anderem die Lage der Kristallachse relativ zur Einfallsebene des Lichts und seiner Polarisation die optischen Eigenschaften des akusto-optischen Elements bestimmen.

Mit Hilfe der genannten akusto-optischen Filter (AOTFs) können also aus dem Wellenlängenspektrum der Weißlichtquelle ein oder mehrere Wellenlängenbereiche selektiv ausgewählt werden. Ein einfallender Lichtstrahl, welcher das Phasengitter im Kristall durchläuft, wird dann in seine Beugungsordnungen aufgespalten. Durch Variieren der Frequenz $f_0$ der akustischen Welle ändert sich die Frequenz des Phasengitters im akusto-optischen Kristall und damit auch die Wellenlänge $\lambda_0$ des gebeugten Lichts. AOTFs können so realisiert werden, dass die Schwerpunktswellenlängen $\lambda_0$ der ausgewählten Wellenlängenbereiche den akusto-optischen Kristall colinear verlassen. Andere Wellenlängen innerhalb der ausgewählten Wellenlängenbereiche besitzen aber eine andere Abstrahlrichtung.

Diese Änderung der Abstrahlrichtung beziehungsweise die räumliche Trennung zwischen der gewünschten Wellenlänge (im Folgenden auch als Zielwellenlänge bezeichnet) $\lambda_0$ und dem übrigen, in den akusto-optischen Kristall eingestrahlten Licht wird zur Trennung des Lichts ausgenutzt. Dies ist beispielsweise ebenfalls in der bereits zitierten DE 101 15 488 A1 beschrieben, welche eine Lichtquelle mit einem Weißlichtlaser (mit einer Faser) und einem nachgeschalteten AOTF zeigt.

Eine Schwierigkeit bekannter akusto-optischer Filter besteht jedoch darin, dass die Zuordnung einer eingekoppelten Radiofrequenz einer akustischen Welle zu einer bestimmten Zielwellenlänge in der Praxis nicht eindeutig ist. Die Form der Übertragungsfunktion des AOTFs, also die Frequenzen beziehungsweise Wellenlängen des Ziellichtstrahls, welcher durch den AOTF bei einer festen Radiofrequenz hindurchgelassen wird, stellt keine idealisierte δ-Funktion dar, sondern entspricht in etwa der folgenden Funktion:

$$T \sim \sin^2(f - f_0)/(f - f_0)^2 \qquad (1)$$

Dies bedeutet, dass die Übertragungsfunktion eines AOTFs zahlreiche Nebenmaxima aufweist, welche zwar erheblich schwächer ausgeprägt sind als das zentrale Hauptmaximum bei der Frequenz $f_0$ beziehungsweise der Wellenlänge $\lambda_0$ des Lichts, welche sich jedoch in der Spektroskopie störend bemerkbar machen können.

So wird beispielsweise Licht der Zielwellenlänge (Hauptmaximum der Übertragungsfunktion des AOTFs) Licht im Bereich der Nebenmaxima überlagert, da die Weißlichtquelle ebenfalls in diesem Spektralbereich emittiert und der AOTF in diesem Bereich durchlässig ist. Dieses Licht überlagert sich später, beispielsweise nach Reflexion an der Probe, dem eigentlichen Detektionslicht. Wellenlängenselektive Elemente, welche das eigentliche Anregungslicht vom Detektionslicht trennen sollen, sind jedoch häufig so stark wellenlängenselektiv, dass diese lediglich das eigentliche Detektionslicht (zum Beispiel Fluoreszenzlicht der Probe) von einer bestimmten Anregungswellenlänge $\lambda_0$ trennen, jedoch keine ausreichende Trennung bei Anregungslicht außerhalb der Wellenlänge $\lambda_0$ gewährleisten. Dies kann dazu führen, dass Anregungslicht in den Detektor gelangt, was wiederum das Signal-zu-Rausch-Verhältnis des Bildes der Probe stark verschlechtert. So können insbesondere die eigentlichen Fluoreszenzsignale bei einer Fluoreszenzspektroskopie um Größenordnungen schwächer sein als das Anregungslicht, so dass das eigentliche Signal durch das zusätzlich zum Detektor gelangende Anregungslicht stark beeinträchtigt wird.

Besonders ausgeprägt ist diese Problematik bei Mikroskopen, bei welchen die Trennung von Anregungslicht und Detektionslicht mit Hilfe von akusto-optischen Strahlteilern (acousto-optic beam splitter, AOBS) erfolgt. Auch ein AOBS weist eine Übertragungsfunktion auf, bei der die trennende Wirkung durch ein scharfes Maximum in der Übertragungsfunktion gekennzeichnet ist. In der Regel ist dieses Hauptmaximum jedoch erheblich breiter als das Maximum der Übertragungsfunktion eines AOTF, so dass in das Maximum der Übertragungsfunktion des AOBS ein oder mehrere Nebenmaxima der Übertragungsfunktion des AOTFs fallen. Dies bedeutet, dass der AOBS spektrale Bestandteile der Weißlichtquelle, welche im Bereich dieser Nebenmaxima der Übertragungsfunktion des AOTFs liegen, in hohem Maße zum Detektor des Mikroskops gelangen lässt.

Über den bereits genannten Stand der Technik hinausgehend offenbart die US 4 084 182 A ein Verfahren zur Modulation eines mehrere Wellenlängen umfassenden Laserstrahls zum Erzeugen eines großformatigen Fernsehbilds. Der Laserstrahl wird durch einen akustooptischen Modulator geleitet, in dem die einzelnen Wellenlängen durch Einkoppeln entsprechender mechanischer Wellen in ihrer Intensität moduliert werden können, so dass eine gewünschte Farbe durch Mischen der verschiedenen Ursprungswellenlängen entsteht. Hinter dem akustooptischen Modulator ist ein Raumfilter angeordnet, um durch Übersprechen der mechanischen Wellen auf weitere optische Wellenlängen verursachte, ungewünschte Strahlanteile aus dem Laserstrahl herauszufiltern.

Aus der US 5 377 003 A ist es bekannt, zur Auswahl einer Beleuchtungswellenlänge für ein Interferometer einen AOTF einzusetzen. Hinter dem AOTF ist eine Blende angeordnet, die den Strahl 0. Ordnung blockiert, so dass lediglich die ausgewählte Wellenlänge in das Spektrometer hinein propagiert.

Weiterhin beschreibt die JP 2003 065850 A ein akustooptisches Filterelement, in dem ein nach dem akustooptischen Kristall angeordnetes Linsenelement einen Ziellichtstrahl auf ein in der Blendenöffnung einer Blende angeordnetes Ende einer Lichtfaser fokussiert.

## Aufgabe der Erfindung

Es ist daher eine Aufgabe der vorliegenden Erfindung, ein akusto-optisches Filterelement bereitzustellen, welches die oben beschriebenen Nachteile bekannter akusto-optischer Filterelemente vermeidet. Insbesondere soll das akusto-optische Filterelement geeignet sein, um Nebenmaxima in der Übertragungsfunktion seiner Durchlässigkeit effizient zu unterdrücken.

## Beschreibung der Erfindung

Diese Aufgabe wird durch ein akusto-optisches Filterelement mit den Merkmalen des unabhängigen Anspruchs 1 gelöst. Vorteilhafte Weiterbildungen der Erfindung, welche einzeln oder in Kombination realisiert werden können, sind in den abhängigen Ansprüchen dargestellt.

Die vorliegende Erfindung beruht im Wesentlichen auf der Entdeckung, dass sich die oben beschriebene Übertragungsfunktion bekannter akusto-optischer Filterelemente durch geeignete Abbildungsmaßnahmen vom Frequenzbereich in einen räumlichen Bereich umwandeln lässt. Aus der beschriebenen Funktion $\sin^2(f - f_0)/(f - f_0)^2$ wird bei dieser Transformation eine entsprechende Intensitätsverteilung in einer Ebene senkrecht zur optischen Achse des Ziellichtstrahls, welche beispielsweise der Funktion $I(r) \sim \sin^2 r/r^2$ (mit r = Abstand von der optischen Achse) folgt. Eine derartige Transformation vom Frequenzbereich in den räumlichen Bereich kann beispielsweise durch entsprechende fokussierende optische Elemente erfolgen, beispielsweise eine Linse und/oder einen gekrümmten Spiegel. Auch komplexere Anordnungen, welche derartige Abbildungseffekte bewirken, können gewählt werden. Beispielsweise erfolgt diese Abbildung vom Frequenzbereich in den räumlichen Bereich in einer Brennebene der Linse beziehungsweise des gekrümmten Spiegels.

Diese Umwandlung der Übertragungsfunktion des AOTFs vom Frequenzbereich in den räumlichen Bereich ermöglicht es nunmehr, durch entsprechende Raumfilterung die unerwünschten Anteile zu beseitigen.

Es wird dementsprechend ein akusto-optisches Filterelement vorgeschlagen, welches einen akusto-optischen Kristall der oben beschriebenen Art aufweist, sowie einen akustischen Signalgeber zur Erzeugung akustischer Signale in dem akusto-optischen Kristall. Der akusto-optische Kristall soll derart eingerichtet sein (beispielsweise durch entsprechende Kristallschnitte), um entsprechend einer an den akustischen Signalgeber applizierten Hochfrequenz selektiv Licht einer Zielwellenlänge aus einem in den akusto-optischen Kristall eintretenden Eingangslichtstrahl räumlich abzulenken und so einen Ziellichtstrahl mit einer gewünschten Zielwellenlänge zu erzeugen beziehungsweise auszugeben. Insofern kann das akusto-optische Filterelement beispielsweise dem in DE 101 15 488 A1 beschriebenen akusto-optischen Filterelement oder einem anderen der oben beschriebenen akusto-optischen Filterelemente entsprechen.

Unter Ausnutzung des oben beschriebenen Effekts der Transformation vom Frequenz- in den Raumbereich weist das akusto-optische Filterelement jedoch weiterhin mindestens ein im Ziellichtstrahl angeordnetes Raumfilterelement auf. Dieses Raumfilterelement soll ausgestaltet sein, um in einer Ebene senkrecht zur Ausbreitungsrichtung des Ziellichtstrahls selektiv die Intensität des Ziellichtstrahls zu unterdrücken.

Wie oben beschrieben, kann das Raumfilterelement auf verschiedene Weisen ausgestaltet sein. Insbesondere kann das Raumfilterelement ein Linsenelement umfassen, welches den Ziellichtstrahl optisch abbildet. Dabei ist der Begriff des Linsenelements weit zu fassen, da, wie oben beschrieben, auch andere abbildende Elemente eingesetzt werden können, wie zum Beispiel (neben einfachen kreisförmigen oder zylindrischen Linsen) komplexe Linsensysteme (zum Beispiel Objektive, auch mit variabler Brennweite), Hohlspiegel, optische Resonatoren oder andere abbildende beziehungsweise bildgebende Elemente.

Weiterhin kann das Raumfilterelement eine Blende umfassen. Diese Blende kann insbesondere zumindest näherungsweise in einer Brennebene des Linsenelements angeordnet sein, da dort die beschriebene Umwandlung vom Frequenz- in den Raumbereich stark ausgeprägt ist. Insbesondere ist bei Gaußscher Strahloptik eine Abweichung der Positionierung der Blende aus der Fokusebene um nicht mehr als das Doppelte der Strahltaille des Ziellichtstrahls wünschenswert. Zusätzlich zu der Blende kann optional mindestens eine weitere Blende vorgesehen sein. Insbesondere kann mindestens eine zweite Blende in der Apertur des Linsenelements vorgesehen sein, welche dort als Raumfilter wirkt.

Die Blende kann dabei verschiedene bekannte Arten von Blenden umfassen. Insbesondere können quadratische Blenden, Rechteckblenden, Kreisblenden oder Irisblenden zum Einsatz kommen, sowie Kombinationen dieser und/oder anderer Blenden. Da die Strahlablenkung durch das akusto-optische Filterelement (im Folgenden AOTF genannt) im Wesentlichen in einer Ebene erfolgt, ist es besonders bevorzugt, wenn die Blende eine Schlitzblende umfasst, also eine Blende mit einem schmalen Öffnungsspalt, welcher sich vorzugsweise senkrecht zu der vom Eingangslichtstrahl und dem Ziellichtstrahl aufgespannten Ebene erstreckt.

Besonders bevorzugt ist es dabei, wenn die Blende eine einstellbare Öffnung umfasst. Insbesondere kann es sich bei dieser einstellbaren Öffnung um eine elektronisch einstellbare Öffnung handeln, was beispielsweise bei Schlitzblenden und/oder Irisblenden leicht technisch zu realisieren ist. In diesem Fall kann auf bevorzugte Weise die Übertragungsfunktion des AOTFs nach der Erfindung elektronisch beeinflusst werden, so dass beispielsweise eine elektronische Kalibration und/oder eine elektronische Steuerung realisierbar sind. Beispielsweise kann die Öffnungsweite durch einen Schrittmotor oder einen ähnlichen Aktuator verstellt werden.

Anstelle einer Kombination eines Linsenelements mit einer Blende lassen sich jedoch auch andere Raumfilterelemente realisieren. Insbesondere kann das Raumfilterelement, alternativ oder zusätzlich, einen Lichtwellenleiter und ein zwischen einem Ende (Einkoppelende) des Lichtwellenleiters und dem akusto-optischen Kristall angeordnetes Linsenelement umfassen. Wiederum ist, wie oben ausgeführt, der Begriff des "Linsenelements" weit zu fassen und kann verschiedene Arten bildgebender Systeme umfassen. Das Linsenelement soll eingerichtet sein, um einen Teil des Ziellichtstrahls in das Ende des Lichtwellenleiters einzukoppeln. In diesem Fall schneidet die begrenzte Öffnung des Lichtwellenleiters, bei welchem es sich vorzugsweise um eine Einmodenfaser (single mode fiber) handelt, unerwünschte Seitenmoden der räumlichen Übertragungsfunktion ab. Das Faserende sollte sich wieder vorzugsweise zumindest näherungsweise im Fokus der Linse befinden. Die numerische Apertur der Linse bestimmt dann in wesentlichem Maße die Breite der Übertragungsfunktion in der Brennebene der Linse, das heißt im Bereich des Faserendes. Zusätzlich zur Linse kann ein weiteres Blendenelement vorgesehen sein, welches die numerische Apertur der Linse weiter einschränkt. Die numerische Apertur und die Blendenmaße beziehungsweise der Durchmesser des Lichtleitfaserkerns werden so aufeinander abgestimmt, dass nur die gewünschte Breite des Wellenlängenbereichs die Blende passiert beziehungsweise in die Faser eingekoppelt wird. Vorzugsweise wird die numerische Apertur der Linse und die Blende beziehungsweise die Faser so gewählt, dass die Nebenmaxima der Übertragungsfunktion durch die Blende geblockt werden beziehungsweise nicht in die Faser eingekoppelt werden. Im Falle der Verwendung eines Lichtwellenleiters und eines Linsenelements ist es besonders bevorzugt, wenn der Abstand und/oder die Ausrichtung des Linsenelements relativ zum Ende des Lichtwellenleiters einstellbar ist, vorzugsweise elektronisch (zum Beispiel unter Verwendung entsprechender Stellmotoren). Beispielsweise kann die Linse als Variooptik ausgestaltet sein. Weiterhin kann die Variooptik auch mit einem Motor versehen werden und beispielsweise über Software angesteuert und kontrolliert werden.

Das Raumfilterelement kann insbesondere derart eingestellt werden, dass Nebenmaxima einer höheren Ordnung als 2, vorzugsweise bereits Nebenmaxima der 1. Ordnung, unterdrückt werden. Diese Unterdrückung kann derart erfolgen, dass diese Nebenmaxima vollständig geblockt werden. In diesem Fall wird lediglich das Hauptmaximum der räumlichen Intensitätsverteilung des Ziellichtstrahls und somit auch das Hauptmaximum der Frequenzverteilung der Übertragungsfunktion transmittiert. Auch stärkere Einschränkungen sind möglich, so dass beispielsweise das Raumfilterelement derart eng eingestellt wird, dass bereits äußere Teilbereiche des Hauptmaximums geblockt werden. Das akusto-optische Filterelement kann insbesondere derart ausgestaltet sein, dass dieses weiter eine elektronische Steuerung umfasst. Diese elektronische Steuerung kann genutzt werden, um das Raumfilterelement zu steuern, das heißt die Übertragungsfunktion des akusto-optischen Filterelements zu beeinflussen. Hierfür kann die elektronische Steuerung eingerichtet sein, um auf die oben genannten Elemente, die die Übertragungsfunktion beeinflussen, einzuwirken. Insbesondere kann die elektronische Steuerung ausgestaltet sein, um einen Linsenfokus, eine Linsenbrennweite, eine Blendenweite, einen Abstand zwischen Linse und Blende, einen Abstand zwischen Linse und Faser oder andere räumliche Ausrichtungen einzustellen.

Zusätzlich kann die elektronische Steuerung auch eingerichtet werden, um die Zielwellenlänge einzustellen, beispielsweise indem die elektronische Steuerung die an den akustischen Signalgeber applizierte Hochfrequenz einstellt. Die elektronische Steuerung kann dementsprechend beispielsweise einen oder mehrere elektronische Bausteine umfassen und/oder einen oder mehrere Prozessoren, beispielsweise einen Mikroprozessor. Daneben können weitere Elemente vorgesehen sein, wie beispielsweise Ein- und Ausgabeelemente, Datenspeicher etc. Auch eine Schnittstelle zur Kommunikation mit einem weiteren Computer kann vorgesehen sein. Weiterhin kann die elektronische Steuerung beispielsweise auch einen elektronischen Speicher umfassen (beispielsweise einen flüchtigen oder nicht flüchtigen Speicher), in welchem eine Kurvenfunktion der räumlichen Intensitätsverteilung des Ziellichtstrahls hinterlegt ist. Auf diese Weise kann beispielsweise gezielt eine Blende auf eine gewünschte Öffnungsbreite eingestellt werden, wenn beispielsweise gezielt bestimmte Nebenmaxima unterdrückt werden sollen.

Das akusto-optische Filterelement kann weiterhin eine Kalibrationsvorrichtung umfassen, um auf schnelle und bequeme Weise Übertragungsfunktionen des akusto-optischen Filterelements aufzunehmen und das akusto-optische Filterelement entsprechend einzustellen. So kann die Kalibrationsvorrichtung beispielsweise eine durchstimmbare kohärente Testlichtquelle enthalten, deren Lichtstrahl als Eingangslichtstrahl in das akusto-optische Filterelement beziehungsweise den akusto-optischen Kristall eingekoppelt werden kann. Weiterhin kann die Kalibrationsvorrichtung einen Detektor umfassen, welcher eingerichtet ist, um eine Intensität des Ziellichtstrahls zu messen.

Die beschriebene Kalibrationsvorrichtung kann genutzt werden, um verschiedene Übertragungsfunktionen aufzunehmen: Einerseits kann bei einer festen Hochfrequenz des akustischen Signalgebers die Wellenlänge der Testlichtquelle verändert (beispielsweise über einen vorgegebenen Wellenlängenbereich kontinuierlich durchgestimmt) werden, wobei die Intensität des Ziellichtstrahls gemessen wird. Alternativ oder zusätzlich kann auch bei einer festen Wellenlänge der Testlichtquelle die Hochfrequenz des akustischen Signalgebers verändert werden, wobei die Intensität des Ziellichtstrahls gemessen werden kann. Auf diese Weise können, nach einem oder beiden der beschriebenen Verfahren, beispielsweise die oben beschriebene $\sin^2 x/x^2$-Funktion aufgenommen und die Breite der Maxima dieser Übertragungsfunktion ermittelt werden. Dementsprechend kann dann das Raumfilterelement auf eine gewünschte Breite eingestellt werden.

Diese Kalibration kann beispielsweise während oder nach einer werksseitigen Montage erfolgen, oder die Kalibration kann auch Bestandteil einer routinemäßigen Überprüfung beziehungsweise Einstellung eines Systems (zum Beispiel eines Mikroskops, siehe unten) sein. Verschiedene Einsatzmöglichkeiten einer derartigen Kalibrationsvorrichtung sind denkbar.

Das beschriebene akusto-optische Filterelement in einer der dargestellten Ausführungsformen bietet gegenüber herkömmlichen akusto-optischen Filterelementen zahlreiche Vorteile. So kann insbesondere gezielt Einfluss genommen werden auf die spektrale Übertragungsfunktion, was sich besonders positiv in der Laserspektroskopie und in der Lasermikroskopie bemerkbar macht. Das akusto-optische Filterelement kann genutzt werden, um Anregungslicht effizient zu unterdrücken und auf diese Weise das Signal-zu-RauschVerhältnis erheblich zu verbessern.

Neben dem akusto-optischen Filterelement in einer der oben beschriebenen Ausführungsformen wird weiterhin eine einstellbare Lichtquelle vorgeschlagen, welche ein akusto-optisches Filterelement in einer der beschriebenen Varianten umfasst. Weiterhin umfasst die einstellbare Lichtquelle eine breitbandige kohärente Lichtquelle, welche eingerichtet und angeordnet ist, um den Eingangslichtstrahl für das akusto-optische Filterelement zu erzeugen. Anstelle eines einzelnen akusto-optischen Filterelements können auch mehrere akusto-optische Filterelemente vorgesehen sein. Die Lichtquelle kann vorzugsweise derart ausgestaltet sein, dass die genannten Bauelemente der einstellbaren Lichtquelle, und gegebenenfalls weitere Bauelemente, in einem gemeinsamen Gehäuse angeordnet sind. Alternativ kann die breitbandige kohärente Lichtquelle auch außerhalb und räumlich getrennt von dem akusto-optischen Filterelement angeordnet sein und mit diesem über einen Strahlengang und/oder einen optischen Lichtwellenleiter verbunden sein. Beispielsweise kann hierfür wieder ein Lichtwellenleiter verwendet werden.

Unter einer "breitbandigen" kohärenten Lichtquelle ist dabei insbesondere eine Lichtquelle zu verstehen, welche Licht in einem Spektralbereich emittiert, welcher im ultravioletten und/oder sichtbaren und/oder infraroten Spektralbereich liegt, wobei die Breite des emittierten Spektrums vorzugsweise größer ist als 10 nm, insbesondere größer als 100 nm.

Die breitbandige kohärente Lichtquelle kann eine oder mehrere Lichtquellen umfassen. Insbesondere kann diese einen breitbandigen Laser, insbesondere einen Weißlichtlaser, umfassen. Zu diesem Zweck können beispielsweise mehrere Laserlichtquellen überlagert werden, insbesondere mittels einer geeigneten Vorrichtung zur Überlagerung der Strahlen der Laserlichtquellen (zum Beispiel eines oder mehrerer Strahlteiler). Weiterhin kann, alternativ oder zusätzlich, die breitbandige kohärente Lichtquelle auch einen Lichtwellenleiter mit einer spektral verbreiternden Dotierung und einen entsprechenden Pumplaser umfassen, wobei die Dotierung insbesondere eine Seltenerd-Dotierung umfasst, insbesondere eine Dotierung mit ErNd, Yb, Ho und/oder eine Halbleiterdotierung, insbesondere eine Germanium-Dotierung. Derartige dotierte Lichtwellenleiter beziehungsweise Fasern sind dem Fachmann bekannt und bereits teilweise kommerziell erhältlich. Alternativ oder zusätzlich kann auch ein spektral verbreiternder Lichtwellenleiter verwendet werden, welcher eine entsprechende Strukturierung aufweist. Insbesondere kann es sich hierbei um einen Lichtwellenleiter handeln, welcher eine getaperte Faser, eine mikrostrukturierte Faser, eine photonische Kristallfaser, eine Holey-Faser, eine photonicband-gap-Faser oder eine ähnliche Faser umfasst. Für derartige Faserlichtquellen kann beispielsweise auf DE 101 15 488 A1, DE 101 15 509 A1, DE 101 15 589 A1 oder andere Druckschriften verwiesen werden. Insofern soll auf die genauere Ausgestaltung derartiger strukturierter Lichtwellenleiter zur Erzeugung eines breitbandigen Spektrums hier nicht weiter eingegangen werden.

Die einstellbare Lichtquelle in einer der beschriebenen Ausgestaltungen lässt sich in verschiedenen Bereichen der Naturwissenschaften, der Technik oder der Medizin nutzbringend einsetzen. Auch hier machen sich wiederum die beschriebenen vorteilhaften Aspekte des akusto-optischen Filterelements positiv bemerkbar. So kann die einstellbare Lichtquelle insbesondere im Bereich der Spektroskopie gewinnbringend eingesetzt werden. Eine andere Anwendung, welche einen Schwerpunkt der vorliegenden Erfindung bildet, ist die Anwendung in einem Mikroskop zur Aufnahme von Bildinformationen einer Probe. Beispielsweise kann es sich dabei um eine biologische Probe, beispielsweise einen Gewebeschnitt eines menschlichen, tierischen oder pflanzlichen Gewebes handeln. Auch andere Arten von Proben sind jedoch einsetzbar, beispielsweise Proben aus den Bereichen der Materialwissenschaften oder andere Arten von Proben.

Das vorgeschlagene Mikroskop umfasst dementsprechend eine Strahloptik und eine einstellbare Lichtquelle in einer der beschriebenen Ausführungsformen. Das Mikroskop kann beispielsweise als gewöhnliches Lichtmikroskop ausgestaltet sein, wobei jedoch die Ausgestaltung als Scanmikroskop bevorzugt ist. Bei diesem Scanmikroskop kann es sich insbesondere um ein Punktscanmikroskop oder, besonders bevorzugt, um ein Zeilenscanmikroskop handeln. Besonders bevorzugt ist dabei aufgrund der hohen Auflösung die Ausgestaltung als Konfokalmikroskop.

Die einstellbare Lichtquelle kann, in Alleinstellung oder in Kombination mit anderen Lichtquellen, in dem Mikroskop eingesetzt werden, um Anregungslicht zu erzeugen. Dabei ist, entsprechend der Ausgestaltung des Mikroskops, der Begriff "Anregungslicht" nicht lediglich dahingehend zu verstehen, dass die Probe von der einstellbaren Lichtquelle beziehungsweise dem von dieser einstellbaren Lichtquelle emittierten Lichtstrahl angeregt wird im Sinne einer Lumineszenz oder Phosphoreszenz. Auch andere Arten von Wechselwirkungen mit der Probe sind denkbar und von der vorgeschlagenen Anordnung umfasst, beispielsweise eine Anordnung, bei welcher das Detektionslicht von der Probe transmittiertes und/oder reflektiertes Anregungslicht umfasst.

Zur Trennung von Anregungslicht und Detektionslicht umfasst das Mikroskop in einer bevorzugten Ausgestaltung einen Strahlteiler mit einer Strahlteiler-Übertragungsfunktion. Dies bedeutet, dass die Trennung beziehungsweise die Trennungseffizienz von Detektions- und Anregungslicht durch den Strahlteiler abhängig ist von der Wellenlänge. Beispielsweise kann als Strahlteiler wiederum ein akusto-optisches Element verwendet werden, welches in diesem Fall als akusto-optischer Strahlteiler bezeichnet wird. Insbesondere kann auch ein akusto-optisches Filterelement gemäß einem der vorhergehenden Ansprüche als Bestandteil eines derartigen akusto-optischen Strahlteilers eingesetzt werden.

In diesem Fall ist es bevorzugt, wenn die Übertragungsfunktion des akusto-optischen Filterelements der einstellbaren Lichtquelle, welche in dem Mikroskop eingesetzt wird, durch Einstellen des Raumfilterelements derart eingerichtet ist, dass die spektrale Breite des Ziellichtstrahls, welcher von der einstellbaren Lichtquelle erzeugt wird, kleiner ist als die spektrale Breite eines Hauptmaximums der Strahlteiler-Übertragungsfunktion. Beispielsweise kann, insbesondere wenn wiederum ein akusto-optisches Strahlteilerelement verwendet wird, dieses wiederum als Übertragungsfunktion eine $\sin^2 x/x^2$-Funktion aufweisen, wobei in diesem Fall vorzugsweise die spektrale Breite des Ziellichtstrahls kleiner gewählt wird als die spektrale Breite des Hauptmaximums der Strahlteilerübertragungsfunktion, vorzugsweise maximal so breit wie die Hälfte der spektralen Breite des Hauptmaximums der Strahlteiler-Übertragungsfunktion.

Neben einem Einsatz in dem Mikroskop kann ein akusto-optischer Strahlteiler, welcher ein akusto-optisches Filterelement in einer der oben beschriebenen Ausführungsvarianten umfasst, auch separat, unabhängig von dem Mikroskop eingesetzt werden. Beispielsweise kann, neben einem Einsatz in der Mikroskopie, auch ein Einsatz auf anderen Gebieten erfolgen, beispielsweise auf dem Gebiet der Laserspektroskopie. Die Vorteile eines derartigen akusto-optischen Strahlteilers mit modifizierbarer Übertragungsfunktion durch Verwendung eines Raumfilters sind identisch zu den oben beschriebenen Vorteilen, und es lässt sich auf diese Weise ein akusto-optischer Strahlteiler erzeugen, welcher eine Übertragungsfunktion mit einem schmalen Hauptmaximum und wenigen oder gar keinen Nebenmaxima aufweist.

Ausführungsbeispiele

Weitere Einzelheiten und Merkmale der Erfindung ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche beziehungsweise hinsichtlich ihrer Funktionen einander entsprechende Elemente.

Im Einzelnen zeigt:

Figur 1 ein Ausführungsbeispiel einer herkömmlichen Lichtquelle mit einem akustooptischen Filterelement;

Figur 2 eine idealisierte Übertragungsfunktion eines herkömmlichen akusto-optischen Filterelements,

Figur 3 eine tatsächliche Übertragungsfunktion eines herkömmlichen akusto-optischen Filterelements bei fester Hochfrequenz;

Figur 4a    ein erstes Ausführungsbeispiel einer erfindungsgemäßen Lichtquelle mit einem akusto-optischen Filterelement und einem Raumfilter;

Figur 4b    eine Detaildarstellung des Bereichs A in Figur 4b;

Figur 5a    ein zweites Ausführungsbeispiel einer erfindungsgemäßen Lichtquelle mit einer optischen Faser;

Figur 5b    eine Detaildarstellung des Bereichs B in Figur 5a;

Figur 6    ein drittes Ausführungsbeispiel einer einstellbaren Lichtquelle mit einer elektronischen Steuerung und einer Kalibrationsvorrichtung;

Figur 7    ein Ausführungsbeispiel eines erfindungsgemäßen Konfokalmikroskops mit einer erfindungsgemäßen einstellbaren Lichtquelle und einem Strahlteilerelement; und

Figur 8    Übertragungsfunktionen der einstellbaren Lichtquelle und des Strahlteilerelements des Mikroskops gemäß Figur 7.

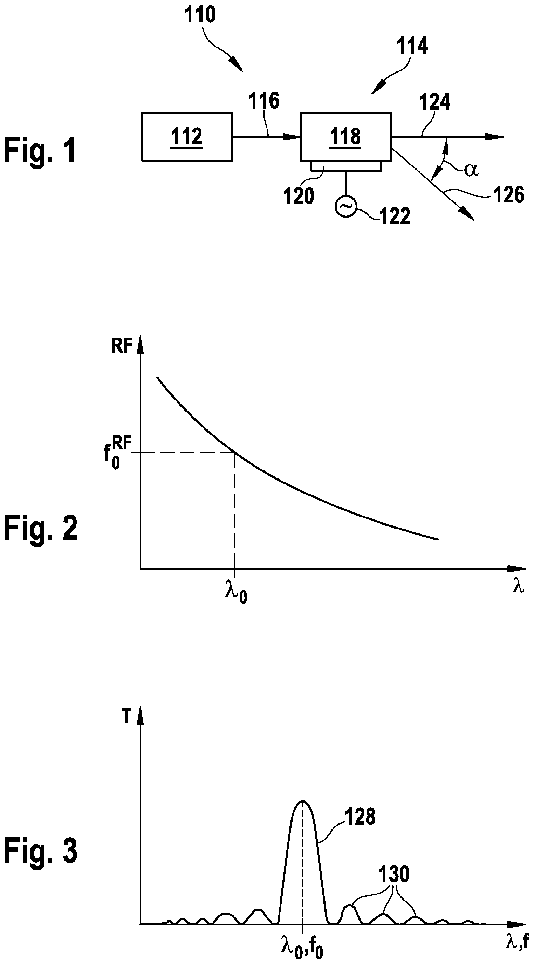

In Figur 1 ist ein dem Stand der Technik entsprechendes Ausführungsbeispiel einer einstellbaren Lichtquelle 110 schematisch dargestellt. Beispielsweise kann es sich dabei um eine einstellbare Lichtquelle 110 gemäß dem in DE 101 15 488 A1 beschriebenen Ausführungsbeispiel handeln. Die einstellbare Lichtquelle 110 umfasst eine breitbandige kohärente Lichtquelle 112 und ein akusto-optisches Filterelement 114.

Bei der breitbandigen kohärenten Lichtquelle 112 kann es sich beispielsweise um einen Weißlichtlaser oder eine andere der oben beschriebenen breitbandigen Lichtquellen zur Erzeugung eines breitbandigen kohärenten Strahlenspektrums handeln, wie beispielsweise einen gepumpten Faserlaser. Auf die oben beschriebenen Möglichkeiten kann dabei Bezug genommen werden.

Die breitbandige kohärente Lichtquelle 112 erzeugt einen Eingangslichtstrahl, welcher in Figur 1 symbolisch mit der Bezugsziffer 116 bezeichnet ist. Dieser Eingangslichtstrahl 116, welcher ein breites Spektrum elektromagnetischer Strahlung umfasst, wird in das akusto-optische Filterelement 114 eingekoppelt.

Das akusto-optische Filterelement 114 umfasst einen akusto-optischen Kristall 118, welcher beispielsweise Tellurdioxid ($TeO_2$) in einem entsprechenden Schnitt umfassen kann. Zur optimalen Einkopplung des Eingangslichtstrahls 116 in den akusto-optischen Kristall 118 können weitere Elemente in der einstellbaren Lichtquelle 110 vorgesehen sein, beispielsweise Elemente, welche die Polarisationsrichtung des kohärenten Eingangslichtstrahls 116 an die Ausrichtung des akusto-optischen Kristalls 118 anpassen (zum Beispiel $\lambda/2$-Plättchen oder ähnliche Elemente).

Weiterhin umfasst das akusto-optische Filterelement 114 einen akustischen Signalgeber 120, welcher häufig auch als Transducer bezeichnet wird. Dieser akustische Signalgeber 120 kann, wie oben beschrieben, zwei oder mehr Elektroden und ein Piezoelement, welches zwischen diese Elektroden eingekoppelt ist, umfassen und ist mit einer Hochfrequenzquelle 122 gekoppelt. Diese Hochfrequenzquelle 122 ist in der Lage, um elektrische Signale im Bereich zwischen einigen kHz bis einigen hundert MHz an den akustischen Signalgeber 120 zu applizieren, in welchem diese in akustische Signale umgewandelt werden, welche wiederum in den akusto-optischen Kristall 118 eingekoppelt werden, um dort die oben beschriebenen akustischen Wellen zu erzeugen.

Das akusto-optische Filterelement 114 ist derart eingerichtet, dass der Eingangslichtstrahl 116 ausgangsseitig in zwei Lichtstrahlen aufgespalten wird: einen Transmissionslichtstrahl 124, welcher im Wesentlichen colinear zum Eingangslichtstrahl 116 verläuft und welcher beispielsweise durch einen Blocker geblockt werden kann oder welcher weiter genutzt werden kann. Weiterhin tritt ausgangsseitig aus dem akusto-optischen Kristall 118 ein Ziellichtstrahl 126 aus, welcher exakt die gewünschte Wellenlänge, welche aus dem Eingangslichtstrahl 116 abgetrennt werden soll, umfasst. Zwischen dem Transmissionslichtstrahl 124 und dem Ziellichtstrahl 126 besteht ein Winkelversatz, welcher in Figur 1 mit $\alpha$ bezeichnet ist und welcher eine entsprechende Trennung der Lichtstrahlen 124 und 126 ermöglicht. Der Ziellichtstrahl 126 kann somit einer bestimmten Verwendung zugeführt werden, beispielsweise einer Verwendung in der Mikroskopie, der Lichtmikroskopie und/oder der (konfokalen) Laserrastermikroskopie.

In Figur 2 ist ein Zusammenhang zwischen der eingekoppelten Hochfrequenz (dort mit RF bezeichnet) und der Wellenlänge $\lambda$ des Ziellichtstrahls 126 in Figur 1 schematisch dargestellt. Es lässt sich erkennen, dass (zumindest innerhalb eines bestimmten Wellenlängenbereiches) eine eineindeutige Beziehung zwischen der eingekoppelten Hochfrequenz der Hochfrequenzquelle 122 und der Wellenlänge $\lambda$ besteht. Bei einer bestimmten Anregungsfrequenz $f_0^{RF}$ lässt sich in dieser idealisierten Darstellung exakt eine Wellenlänge $\lambda_0$, $f_0$ aus dem Eingangslichtstrahl 116 als Ziellichtstrahl 126 auskoppeln.

Bei der in Figur 2 dargestellten idealisierten Beziehung zwischen der eingekoppelten akustischen Hochfrequenz und der Zielwellenlänge $\lambda_0$ (beziehungsweise Zielfrequenz $f_0$) des Ziellichtstrahls 126 sollte sich eigentlich bei einem Frequenzscan des Eingangslichtstrahls 116 in der Intensität des Ziellichtstrahls 126 bei einer festen Hochfrequenz $f_0^{RF}$ eine $\delta$-Funktion mit einem scharfen Peak bei der Zielwellenlänge $\lambda_0$ beziehungsweise Zielfrequenz $f_0$ ergeben. Dies könnte (siehe unten) beispielsweise dadurch getestet werden, dass als Lichtquelle zur Erzeugung des Eingangslichtstrahls 116 anstelle der breitbandigen kohärenten Lichtquelle 112 eine schmalbandige, durchstimmbare kohärente Lichtquelle eingesetzt würde. Als Beispiel derartiger Lichtquellen wären Farbstofflaser oder bestimmte Festkörperlaser zu nennen, welche anstelle von breitbandigem Licht monochromatisches Licht einer festen, durchstimmbaren Wellenlänge erzeugen. Durch Messung der Intensität des Ziellichtstrahls 126 ließe sich auf diese Weise eine Transmissionskurve beziehungsweise eine Übertragungsfunktion messen.

In Figur 3 ist ein noch idealisiertes, jedoch realistischeres Transmissionsspektrum des Ziellichtstrahls 126 bei einem derartigen Durchstimmen des Eingangslichtstrahls 116 dargestellt. Aufgetragen ist die Transmission T als Funktion der Wellenlänge $\lambda$ eines eingekoppelten, monochromatischen kohärenten Eingangslichtstrahls 116.

Deutlich ist zu erkennen, dass, anstelle der erwarteten Dirac'schen $\delta$-Funktion in der Übertragungsfunktion ein Hauptmaximum 128 und mehrere Nebenmaxima 130 auftreten. Die Nebenmaxima werden üblicherweise, entsprechend ihrer Entfernung zum Hauptmaximum 128, als Nebenmaxima 1., 2. usw. Ordnung bezeichnet. Allgemein stellt die Übertragungsfunktion $T(\lambda)$ beziehungsweise $T(f)$ einen Verlauf einer $\sin^2 x/x^2$-Funktion dar, was sich auch theoretisch begründen lässt. Gemessene Ausführungsbeispiele von Transmissionskurven akusto-optischer Elemente (dort akusto-optischer Strahlteilerelemente, bei denen ähnliche Übertragungsfunktionen auftreten) sind beispielsweise auch in EP 1 281 997 A2 dargestellt.

Bei Verwendung einer monochromatischen Lichtquelle zur Erzeugung des Eingangslichtstrahls 116 stellt die in Figur 3 dargestellte Übertragungsfunktion in der Regel keine Schwierigkeit dar. Problematisch ist diese Übertragungsfunktion jedoch, wenn, wie in Figur 1 dargestellt, das akustooptische Filterelement 114 in einer einstellbaren Lichtquelle 110 mit einer breitbandigen kohärenten Lichtquelle 112 verwendet wird. In diesem Fall umfasst das Spektrum des Eingangslichtstrahls 116 in der Regel auch Anteile im Bereich der Nebenmaxima 130, welche somit nach Passieren des akusto-optischen Filterelements 114 ebenfalls Bestandteil des Ziellichtstrahls 126 bilden. Für verschiedene Anwendungen, insbesondere im Bereich der Laserspektroskopie und/oder im Bereich der Mikroskopie, stellt dies ein erhebliches Problem dar, da diese unerwünschten spektralen Anteile des Ziellichtstrahls 126 beispielsweise unerwünschte atomare oder molekulare Übergänge anregen können oder sich, wie oben beschrieben und wie unten noch weiter ausgeführt wird, dem Detektionslicht in einem Detektor überlagern und somit die Signalqualität erheblich verschlechtern können.

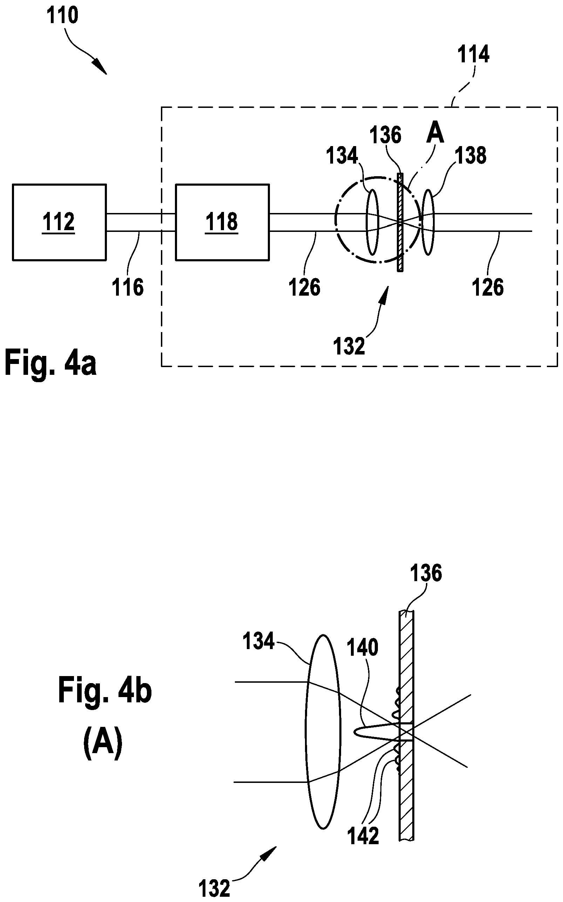

In den Figuren 4a bis 6 sind daher Ausführungsbeispiele von einstellbaren Lichtquellen 110 dargestellt, welche erfindungsgemäß verbessert sind und welche ein akusto-optisches Filterelement 114 gemäß der Erfindung umfassen.

In allen Fällen umfassen die einstellbaren Lichtquellen 110 jeweils wiederum eine breitbandige kohärente Lichtquelle 112, wobei auf die obige Beschreibung verwiesen werden kann. Diese breitbandige kohärente Lichtquelle 112 erzeugt jeweils einen Eingangslichtstrahl 116 mit einem breiten elektromagnetischen Spektrum. Dieser Eingangslichtstrahl 116 wird in das akusto-optische Filterelement 114 eingekoppelt.

Wiederum enthält das akusto-optische Filterelement 114 einen akusto-optischen Kristall 118. Nicht dargestellt in den Ausführungsbeispielen ist der akustische Signalgeber 120, welcher wiederum vorgesehen ist und welcher wiederum die Einkopplung akustischer Signale in den akusto-optischen Kristall 118 ermöglicht.

Die Kombination des akusto-optischen Kristalls 118 mit der Einkopplung einer akustischen Welle ermöglicht wiederum die Separation eines Ziellichtstrahls 126, analog zur Darstellung in Figur 1. Weitere, vom Ziellichtstrahl 126 abgetrennte Lichtbestandteile, insbesondere der Transmissionslichtstrahl 124, sind in den Figuren 4a bis 6 zur Vereinfachung nicht dargestellt, da diese beispielsweise unmittelbar geblockt werden können.

Insofern entspricht der in den Figuren 4a bis 6 dargestellte Aufbau zunächst im Wesentlichen dem Aufbau gemäß Figur 1 und weist im Wesentlichen dieselbe Übertragungsfunktion auf.

Erfindungsgemäß ist jedoch zur "Bereinigung" der in Figur 3 dargestellten Übertragungsfunktion ein Raumfilterelement 132 vorgesehen. Dieses Raumfilterelement 132 basiert auf der Erkenntnis, dass sich die in Figur 3 im Frequenzbereich beziehungsweise Wellenlängenbereich dargestellte Übertragungsfunktion durch geeignete Abbildungsmaßnahmen in eine räumliche Übertragungsfunktion transformieren lässt. Eine derartige Transformation vom Frequenz- in den räumlichen Bereich, beispielsweise eine Fourier-Transformation, ist aus verschiedenen anderen Bereichen der Optik bekannt, beispielsweise aus dem Bereich der Holographie.

In Figur 4a ist ein erstes Ausführungsbeispiel dargestellt, wobei Figur 4b eine Detaildarstellung des Bereichs A in Figur 4a zeigt. Bei dem Aufbau in den Figuren 4a und 4b umfasst das Raumfilterelement 132 zum Zweck der Transformation ein erstes Linsenelement 134, welches im Strahlengang des Ziellichtstrahls 126 hinter dem Ausgang des akusto-optischen Kristalls 118 angeordnet ist. Dieses erste Linsenelement 134, welches anstelle einer einzelnen Linse auch eine Kombination mehrerer Linsen umfassen kann, fokussiert den Ziellichtstrahl 126. In der Brennebene des ersten Linsenelements 134 ist eine Blende 136 angeordnet. Bei dieser Blende 136 kann es sich beispielsweise um eine rechteckförmige Blende oder Schlitzblende handeln, welche vorzugsweise eine einstellbare Öffnungsbreite aufweist. An die Blende 136 schließt sich im Strahlengang ein zweites Linsenelement 138 an, welches den, nunmehr "aufgereinigten" Ziellichtstrahl 126 für eine weitere Verwendung wieder kollimiert.

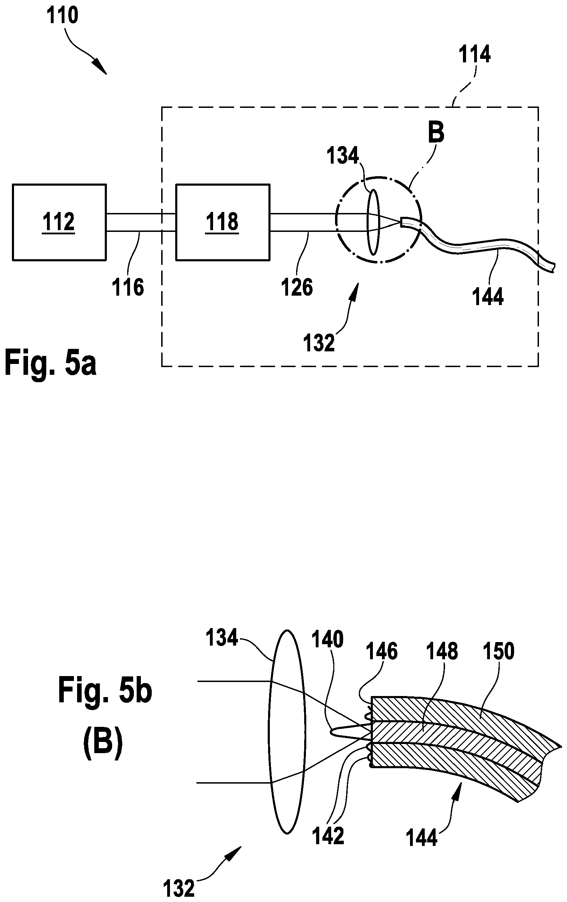

Der räumliche Bereich A (Figur 4a) bzw. B (Figur 5a) um die Blende 136 herum ist in Figur 4b bzw. in Figur 5b jeweils nochmals in vergrößerter Detaildarstellung gezeigt. Dabei ist, wie oben beschrieben, zu erkennen, dass die Übertragungsfunktion, welche in Figur 3 im Frequenzbereich dargestellt ist, nunmehr in eine räumliche Übertragungsfunktion umgewandelt wurde, mit einem räumlichen Hauptmaximum 140 und mehreren räumlichen Nebenmaxima 142. Die Blende 136 wird in ihrer Öffnungsbreite derart eingestellt, dass diese aus der dargestellten Übertragungsfunktion vorzugsweise im Wesentlichen das räumliche Hauptmaximum 140 hindurchlässt, wohingegen die Nebenmaxima 142 im Wesentlichen abgeschnitten werden. Auch andere Ausgestaltungen sind möglich, beispielsweise eine Ausgestaltung, bei der die Öffnungsbreite der Blende 136 derart gewählt wird, dass auch die ersten Nebenmaxima 142 hindurchgelassen werden, oder eine Ausgestaltung, bei welcher die Öffnungsweite derart eng gewählt wird, dass nicht nur die Nebenmaxima 142 abgeschnitten werden, sondern auch ein äußerer Teil des räumlichen Hauptmaximums 140. Die räumliche Intensitätsverteilung, welche ebenfalls einer $\sin^2 x/x^2$-Funktion entspricht, kann, beispielsweise durch Ersetzen der Blende 136 durch einen Schirm, auch unmittelbar mit dem Auge oder einer Vergrößerungseinrichtung beobachtet werden, um dann die Blendenbreite entsprechend einzustellen.

Die in Figur 4a dargestellte einstellbare Lichtquelle 110 kann insbesondere in der Mikroskopie, der Lichtmikroskopie und der (konfokalen) Laserrastermikroskopie eingesetzt werden. Mit Hilfe des akusto-optischen Filterelements 114 können (auch gleichzeitig) die Leistung und die Wellenlänge des ausgewählten Wellenlängenbandes des Ziellichtstrahls 126 variiert werden. Der Aufbau des akusto-optischen Filterelements 114 kann in ein (in den Figuren nicht dargestelltes) Gehäuse integriert werden und kann somit als selbstständige Einheit vertrieben werden. Insbesondere kann das akusto-optische Filterelement 114 auch in ein Gehäuse (ebenfalls nicht dargestellt) der einstellbaren Lichtquelle 110 und/oder in ein Gehäuse eines Mikroskops integriert werden.

Die Breite des ausgewählten Wellenlängenbereichs kann variiert werden, indem die Breite der Blendenöffnung der Blende 136 variiert wird. Alternativ oder zusätzlich kann auch die Linse 134 als Variooptik ausgestaltet sein. Die variable Blende 136 beziehungsweise die Variooptik kann auch mit einem Motor versehen werden und zum Beispiel über eine Software angesteuert oder kontrolliert werden. Insbesondere kann es sinnvoll sein, die Breite des ausgewählten Wellenlängenbereichs in Abhängigkeit von einer Übertragungsfunktion nachgeschalteter Elemente einzustellen (siehe unten).

In Figur 5a ist eine gegenüber Figur 4a leicht modifizierte erfindungsgemäße einstellbare Lichtquelle 110 dargestellt, welche, nachgeschaltet zum akusto-optischen Kristall 118, im Strahlengang des Ziellichtstrahls 126 wiederum ein Linsenelement 134 umfasst. Anstelle oder zusätzlich zu einer Blende 136 ist jedoch in diesem Ausführungsbeispiel ein Lichtwellenleiter 144 vorgesehen, bei welchem es sich vorzugsweise um eine Einmodenfaser handelt. Diese wirkt hier, in Zusammenwirkung mit dem Linsenelement 134, als Raumfilterelement 132.

Wiederum ist eine Detaildarstellung des Bereichs B des Raumfilterelements 132 in Figur 5b vergrößert gezeigt. Dabei ist zu erkennen, dass wiederum die räumliche Intensitätsverteilung in der Brennebene des Lichtwellenleiters 144 auftritt. Dabei ist vorzugsweise das Faserende 146 in der Brennebene des Linsenelements 134 positioniert. Die Faser beziehungsweise der Lichtwellenleiter 144 weist eine Strukturierung mit einem Faserkern 148 und einem Fasermantel 150 auf. Da die Einkopplung im Wesentlichen in den Faserkern 148 erfolgen muss, wirkt die Öffnungsweite des Faserkerns 148 in diesem Ausführungsbeispiel ähnlich zur Blendenöffnung der Blende 136 im Beispiel gemäß den Figuren 4a und 4b. Somit wirkt das Faserende 146 gemeinsam mit der Linse 134 als Raumfilterelement 132.

In diesem Fall kann die Breite des ausgewählten Wellenlängenbereichs beispielsweise durch Verändern des Abstandes zwischen der Linse 134 und dem Faserende 146 in gewissem Maße eingestellt werden. Bevorzugt ist es jedoch, wenn das Linsenelement 134, wie oben beschrieben, als Variooptik ausgestaltet wird, das heißt als Linsenelement 134 mit variabler, vorzugsweise elektronisch (zum Beispiel über einen Motor) einstellbarer Brennweite. Wiederum ist eine Steuerung, zum Beispiel über eine entsprechende Software, sowie eine entsprechende Kontrolle dieser Steuerung sinnvoll.

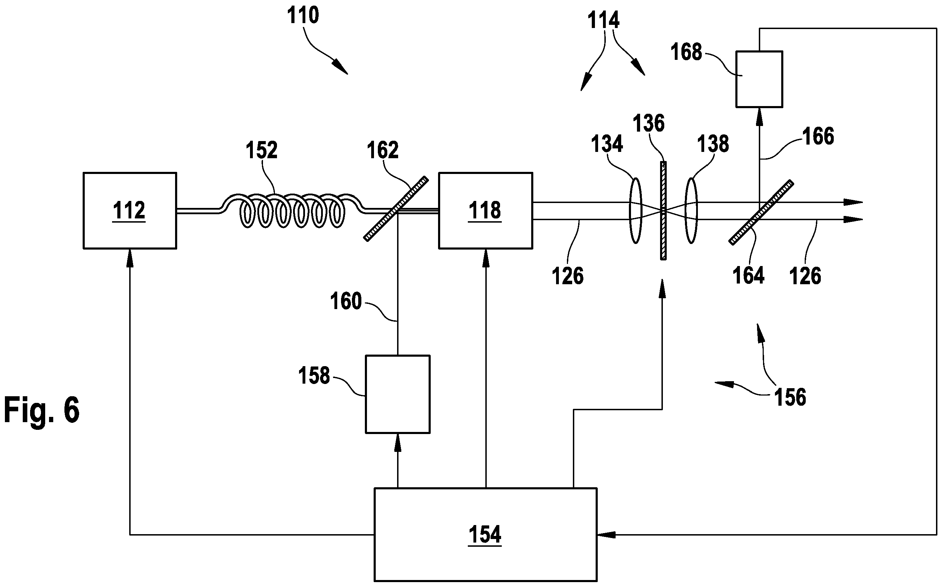

In Figur 6 ist ein drittes Ausführungsbeispiel einer erfindungsgemäßen einstellbaren Lichtquelle 110 dargestellt. Die erfindungsgemäße Lichtquelle 110 ist im Wesentlichen aufgebaut gemäß dem Ausführungsbeispiel in Figur 4a, so dass weitgehend auf die Beschreibung zu dieser Figur verwiesen werden kann. Ein geringfügiger Unterschied besteht in der Tatsache, dass in diesem Fall die breitbandige kohärente Lichtquelle 112 mit dem akusto-optischen Filterelement 114 über einen Lichtwellenleiter in Form einer Faser 152 verbunden ist.

Weiterhin umfasst in dem in Figur 6 dargestellten Ausführungsbeispiel das akusto-optische Filterelement 114 eine elektronische Steuerung 154. Diese elektronische Steuerung 154 kann gleichzeitig auch als elektronische Steuerung für die breitbandige kohärente Lichtquelle 112 ausgestaltet sein. Sie kann insbesondere einen Mikroprozessor, Ein- und Ausgabemittel (wie beispielsweise eine entsprechende Schnittstelle zur Verbindung mit weiteren Computersystemen und/oder elektronischen Komponenten) sowie weitere elektronische Komponenten zur Steuerung umfassen. Insbesondere kann, wie oben ausgeführt, in der elektronischen Steuerung auch ein elektronischer Speicher (zum Beispiel ein flüchtiger und/oder nicht flüchtiger Speicher) vorgesehen sein, in welchem beispielsweise eine oder mehrerer Kurvenverläufe der Transmissionsfunktionen gemäß der Figuren 3 und/oder der räumlichen Übertragungsfunktion gemäß dem Ausschnitt A bzw. B in den Figuren 4a bzw. 5a gespeichert sein können. Entsprechend kann elektronisch dann beispielsweise die Öffnungsbreite der Blende 136 und/oder eine Brennweite der Linse 134 eingestellt werden, wenn eine bestimmte Filterung gewünscht ist. Dies kann beispielsweise an einem Bildschirm durch einen Benutzer erfolgen, welcher, zum Beispiel durch entsprechendes Setzen von Markierungen an einem Bildschirm, die Breite der Übertragungsfunktion einstellen kann.

Weiterhin umfasst das akusto-optische Filterelement 114 in dem Ausführungsbeispiel gemäß Figur 6 eine Kalibrationsvorrichtung 156. Diese weist eine kohärente, durchstimmbare Testlichtquelle 158 (zum Beispiel einen der oben beschriebenen durchstimmbaren Laser) zur Erzeugung eines kohärenten, schmalbandigen Testlichtstrahls 160, einen Strahlteiler 162 zur Einkopplung des Testlichtstrahls in den akusto-optischen Kristall 118, einen zweiten Strahlteiler 164 zur Auskopplung eines Detektionsstrahls 166 und einen Detektor 168 zur Detektion des Detektionsstrahls 166 auf. Die Steuerung 154 kann dementsprechend eingerichtet sein, um in einem Kalibrationsvorgang eine Übertragungsfunktion des akusto-optischen Filterelements 114 zu bestimmen. Dementsprechend kann beispielsweise die Testlichtquelle 158 bei einer festen vorgegebenen Hochfrequenz des akustischen Signalgebers 120 über einen bestimmten Wellenlängenbereich durchgestimmt werden, wobei über den Detektor 168 eine Intensität des Ziellichtstrahls 126 gemessen wird. Auf diese Weise kann beispielsweise eine Funktion gemäß Figur 3 ausgemessen werden. Entsprechend kann, beispielsweise ebenfalls durch die elektronische Steuerung 154, dann beispielsweise eine Breite der Blende 136 eingestellt werden, um diese Übertragungsfunktion zu beeinflussen.

Alternativ oder zusätzlich können auch bei einer festen Wellenlänge der Testlichtquelle 158 die eingekoppelten Hochfrequenzen verändert werden, wobei die Intensität des Ziellichtstrahls 126 gemessen wird. Auf diese Weise ermöglicht die einstellbare Lichtquelle 110 gemäß dem Ausführungsbeispiel in Figur 6 eine schnelle Kalibration und Einstellung der Übertragungsfunktion des akusto-optischen Filterelements 114, was somit problemlos auf übrige Komponenten des Gesamtsystems, in welchem die einstellbare Lichtquelle 110 eingesetzt wird, angepasst werden kann.

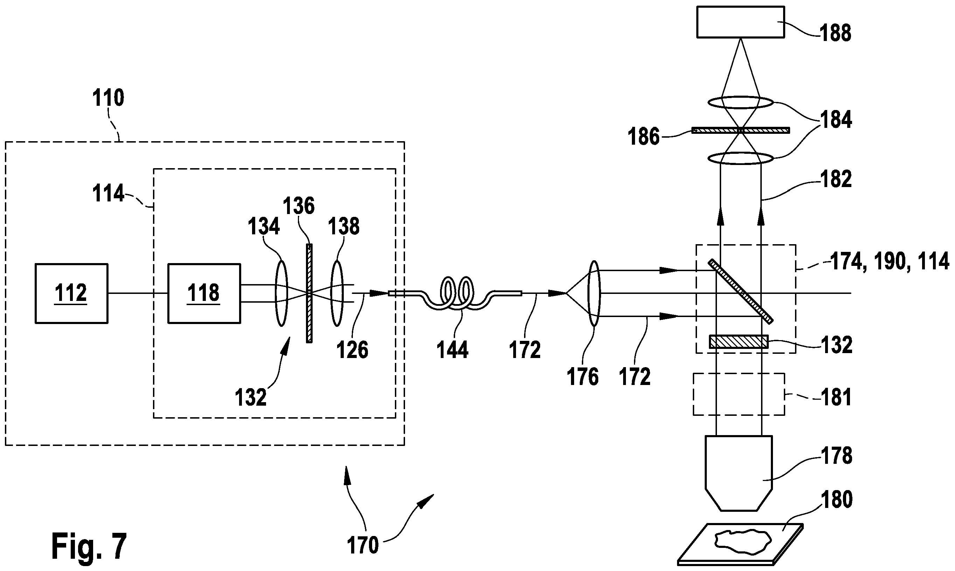

In Figur 7 ist ein mögliches System dargestellt, in dessen Rahmen eine erfindungsgemäße einstellbare Lichtquelle 110 beziehungsweise ein erfindungsgemäßes akusto-optisches Filterelement 114 eingesetzt werden kann. Dieses System ist in dem vorliegenden Fall als Mikroskop 170 ausgestaltet. Bei der hier dargestellten Ausführungsform handelt es sich bei dem Mikroskop 170 um ein konfokales Laserscan-Mikroskop, wobei, wie oben beschrieben, jedoch auch andere Ausführungsformen möglich sind, in deren Rahmen die Erfindung umsetzbar ist.

Das Mikroskop 170 umfasst zunächst eine einstellbare Lichtquelle 110 gemäß dem Ausführungsbeispiel in Figur 4a. Der von dieser Lichtquelle 110 erzeugte Ziellichtstrahl 126 wird in einen Lichtwellenleiter 144 eingekoppelt und als Anregungslicht 172 über eine Strahlformungsoptik 176 (in Figur 7 lediglich angedeutet) einem Strahlteilerelement 174 zugeleitet.

Die Figur 7 zeigt somit ein Ausführungsbeispiel mit einer kombinierten Technik der Ausführungsbeispiele der Figuren 4a und 5a. Zum einen weist das Raumfilterelement 132 zwei Linsenelemente 134, 138 mit einer dazwischen angeordneten Blende 136 auf, zum anderen wird ein Lichtwellenleiter 144 verwendet. Alternativ wäre natürlich auch eine "Reinform" der Ausführungen des Raumfilterelements 132 gemäß einem der Beispiele der Figuren 4a oder 5a einsetzbar.

Über das Strahlteilerelement 174 wird in dem Mikroskop 170 das Anregungslicht 172 über eine Optik 178 auf eine Probe 180 geleitet. Dabei wird in dem in Figur 7 dargestellten Ausführungsbeispiel eine Scanvorrichtung 181 eingesetzt, um mittels des Anregungslichts 172 beispielsweise punktweise (Punktscanner) oder zeilenweise (Zeilenscanner) die Probe 180 mit dem Anregungslicht 172 abzutasten. Beispielsweise kann die Scanvorrichtung 181 einen oder mehrere Galvanometerspiegel umfassen.

Das dabei (beispielsweise über einen Fluoreszenzvorgang) von der Probe 180 emittierte Detektionslicht 182 wird am Strahlteilerelement 174 transmittiert und somit vom Anregungslicht 172 getrennt. An das Strahlteilerelement 174 schließt sich ein weiteres Linsensystem 184 mit einer Konfokalblende 186 an. Diese Konfokalblende 186 ist ein wesentliches Element des Konfokalaufbaus des Mikroskops 170 und trägt erheblich zur Verbesserung der Auflösung der Bildqualität bei.

Anschließend an das Linsensystem 184 umfasst das Mikroskop 170 einen Detektor 188, welcher das Detektionslicht 182 detektiert. Das Mikroskop 170 umfasst daneben weitere Komponenten, wie beispielsweise eine zentrale Steuerung, welche beispielsweise auch die elektronische Steuerung 154 der einstellbaren Lichtquelle 110 beziehungsweise des akusto-optischen Filterelements 114 umfassen kann (siehe Figur 6). Diese, welche beispielsweise wiederum ein Computersystem umfassen kann, bewirkt eine Zusammensetzung des punktweise beziehungsweise zeilenweise aufgenommenen Bildes der Probe 180.

Eine Herausforderung herkömmlicher Mikroskope 170 liegt insbesondere im Aufbau des Strahlteilerelements 174. Für dieses Strahlteilerelement 174 können verschiedene, aus dem Stand der Technik bekannte Elemente eingesetzt werden, wie beispielsweise dichroitische Spiegel, räumlich strukturierte Strahlteilerelemente oder ähnliche Strahlteilerelemente. In vielen Fällen werden jedoch in diesem Strahlteilerelement 174 wiederum akusto-optische Elemente eingesetzt, so dass das Strahlteilerelement 174 beispielsweise in dem in Figur 7 dargestellten Ausführungsbeispiel als akusto-optisches Strahlteilerelement 190 ausgestaltet sein kann. Ein Beispiel eines derartigen akusto-optischen Strahlteilerelements, welches wiederum durch einen Winkelversatz Strahlen unterschiedlicher Wellenlängen voneinander trennen kann, was dann die Strahlteilung ermöglicht, ist in EP 1 281 997 A2 dargestellt.

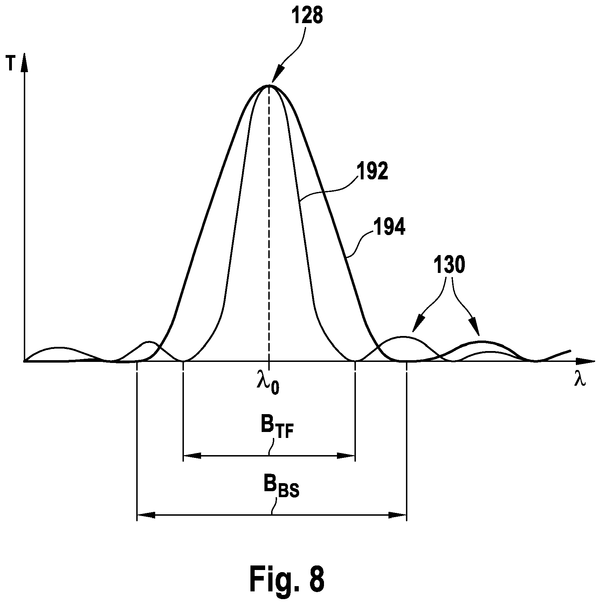

Eine Problematik derartiger Strahlteilerelemente, wie insbesondere akusto-optischer Strahlteilerelemente 190, besteht jedoch wiederum darin, dass diese eine Übertragungsfunktion mit einer charakteristischen Breite aufweisen. Zur Verdeutlichung der Vorteile der Verwendung einer erfindungsgemäßen einstellbaren Lichtquelle 110 beziehungsweise eines akusto-optischen Filterelements 114 sei auf die Darstellung in Figur 8 verwiesen. In dieser Darstellung sind typische Übertragungsfunktionen dargestellt, wobei die Kurve 192 die Übertragungsfunktion des akusto-optischen Filterelements 114 bezeichnet (welche im Wesentlichen der Übertragungsfunktion gemäß Figur 3 entspricht), und die Kurve 194 die Übertragungsfunktion des akusto-optischen Strahlteilerelements 190.

Dabei ist zu erkennen, dass die Übertragungsfunktion 194 des akusto-optischen Strahlteilerelements 190 wesentlich breiter ist (in Figur 8 mit $B_{BS}$ bezeichnet), die Übertragungsfunktion 192 des akusto-optischen Filterelements 114 hingegen erheblich schmaler (in Figur 8 mit $B_{TF}$ bezeichnet). Als "Breite" wurde dabei jeweils der Abstand zwischen den ersten Minima um die Hauptmaxima 128 herum bezeichnet. Auch andere Definitionen der "Breite" wären möglich, beispielsweise eine Halbwertsbreite.

Deutlich erkennbar ist, dass die Nebenmaxima 130 dieser "unbereinigten" Übertragungsfunktion 192 des akusto-optischen Filterelements 114 außerhalb des Hauptmaximums der Übertragungsfunktion 194 des akusto-optischen Strahlteilerelements 190 liegen. Dies bedeutet jedoch, dass Anteile des Anregungslichts 172, welche zur Probe 180 gelangen und von dieser reflektiert werden, am akusto-optischen Strahlteilerelement 190 auf dem "Rückweg" nicht wieder in Richtung der Lichtquelle 110 abgelenkt und somit vom Detektor 188 ferngehalten werden, sondern im Wesentlichen ungehindert zum Detektor 188 gelangen können. In Anbetracht der Tatsache, dass in vielen Fällen das eigentliche Detektionslicht 182 um Größenordnungen schwächer ist als das Anregungslicht 172, stellt dies eine erhebliche Problematik der Detektion des eigentlichen Detektionslichts 182 dar.

Mittels des in Figur 7 dargestellten akusto-optischen Filterelements 114 lässt sich jedoch das Anregungslicht 172 der einstellbaren Lichtquelle 110 derart einstellen, dass dieses im Bereich der ersten Nebenminima abgeschnitten wird. Dies bedeutet insbesondere, dass bei dem in Figur 8 symbolisch dargestellten Spektrum lediglich das Hauptmaximum 128 noch im Anregungslicht 172 enthalten ist. Üblicherweise wird die Übertragungsfunktion des akusto-optischen Filterelements 114 derart eingestellt, dass die Breite $B_{TF}$ gerade die Hälfte der Breite $B_{BS}$ beträgt, was eine wirksame Unterdrückung des Anregungslichtanteils im Detektionslicht 182 bedeutet. Auf diese Weise lässt sich die Qualität der mit dem Mikroskop 170 aufgenommenen Bildinformationen der Probe 180 erheblich verbessern. Insbesondere lassen sich Bildkontraste und Signal-zu-Rausch-Verhältnisse optimieren, was beispielsweise neue Anwendungsmöglichkeiten eröffnet.

In dem in Figur 7 dargestellten Ausführungsbeispiel umfasst das Mikroskop 170 somit zwei akusto-optische Elemente, nämlich das akusto-optische Filterelement 114 und das akusto-optische Strahlteilerelement 190. Alternativ oder zusätzlich zur Verwendung eines Raumfilterelements 132 im akusto-optischen Filterelement 114 der einstellbaren Lichtquelle 110 lässt sich ein akusto-optisches Filterelement 114 mit einem Raumfilterelement 132 auch im akusto-optischen Strahlteilerelement 190 einsetzen. Zu diesem Zweck kann, wie in Figur 7 schematisch angedeutet, auch das akusto-optische Strahlteilerelement 190 mit einem Raumfilterelement 132 ausgestaltet werden, welches in diesem Ausführungsbeispiel zusätzlich im Strahlengang zwischen dem akusto-optischen Strahlteilerelement 190 und der Scanvorrichtung 181 eingebracht ist.

Beispielsweise kann das akusto-optische Strahlteilerelement 190 ausgestaltet sein wie in EP 1 281 997 A2 beschrieben, also wiederum einen akusto-optischen Kristall 118 mit einem akustischen Signalgeber 120 umfassen. Diesem akusto-optischen Kristall 118 nachgeschaltet kann dann wiederum ein Raumfilterelement 132 eingesetzt werden, beispielsweise wiederum ein Raumfilterelement, welches Linsenelemente 134, 138 aufweist (wobei insbesondere ein einzelnes Linsenelement 134 ausreichen würde), sowie eine Blende 136. In diesem Fall würde die Effizienz der Strahlteilung durch das akusto-optische Strahlteilerelement 190 beziehungsweise dessen Übertragungsfunktion derart eingeschränkt, dass lediglich Anregungslicht 172 innerhalb eines schmalen Wellenlängenbereichs um die Zielwellenlänge $\lambda_0$ herum zur Probe 180 gelangt, nicht hingegen Anregungslicht 172 mit weiter von der Zielwellenlänge $\lambda_0$ entfernten spektralen Anteilen, welche auf dem "Rückweg" von der Probe 180 vom akusto-optischen Strahlteilerelement 190 lediglich ungenügend abgelenkt und somit vom Detektor 188 ferngehalten würden. Auch auf diese Weise lässt sich, alternativ oder zusätzlich, die Idee des akusto-optischen Filterelements 114 mit dem Raumfilterelement 132 vorteilhaft einsetzen und zur Verbesserung der Bildqualität nutzen.

Bezugszeichenliste

110    einstellbare Lichtquelle
112    breitbandige kohärente Lichtquelle
114    akusto-optisches Filterelement
116    Eingangslichtstrahl

| | |
|---|---|
| 118 | akusto-optischer Kristall |
| 120 | akustischer Signalgeber |
| 122 | Hochfrequenzquelle |
| 124 | Transmissionslichtstrahl |
| 126 | Ziellichtstrahl |
| 128 | Hauptmaximum |
| 130 | Nebenmaxima |
| 132 | Raumfilterelement |
| 134 | erstes Linsenelement |
| 136 | Blende |
| 138 | zweites Linsenelement |
| 140 | räumliches Hauptmaximum |
| 142 | räumliche Nebenmaxima |
| 144 | Lichtwellenleiter |
| 146 | Faserende |
| 148 | Faserkern |
| 150 | Fasermantel |
| 152 | Faser |
| 154 | elektronische Steuerung |
| 156 | Kalibrationsvorrichtung |
| 158 | Testlichtquelle |
| 160 | Testlichtstrahl |
| 162 | Strahlteiler |
| 164 | Strahlteiler |
| 166 | Detektionsstrahl |
| 168 | Detektor |
| 170 | Mikroskop |
| 172 | Anregungslicht |
| 174 | Strahlteilerelement |
| 176 | Strahlformungsoptik |
| 178 | Optik |
| 180 | Probe |
| 181 | Scanvorrichtung |
| 182 | Detektionslicht |
| 184 | Linsensystem |
| 186 | Konfokalblende |
| 188 | Detektor |
| 190 | akusto-optisches Strahlteilerelement |
| 192 | Übertragungsfunktion AOTF |
| 194 | Übertragungsfunktion AOBS |

**Patentansprüche**

1. Akusto-optisches Filterelement (114), umfassend einen akusto-optischen Kristall (118) mit einem akustischen Signalgeber (12p0) zur Erzeugung akustischer Signale in dem akusto-optischen Kristall (118), wobei der akusto-optische Kristall (118) eingerichtet ist, um entsprechend einer an den akustischen Signalgeber (120) applizierten Hochfrequenz selektiv Licht einer Zielwellenlänge aus einem in den akusto-optischen Kristall (118) eintretenden Eingangslichtstrahl (116) räumlich abzulenken und einen Ziellichtstrahl (126) mit der Zielwellenlänge zu erzeugen, **gekennzeichnet durch** ein im Ziellichtstrahl (126) angeordnetes Raumfilterelement (132), wobei das Raumfilterelement (132) ausgestaltet ist, um in einer Ebene senkrecht zur Ausbreitungsrichtung des Ziellichtstrahls (126) selektiv die Intensität des Ziellichtstrahls (126) zu unterdrücken, und wobei das Raumfilterelement (132) ein Linsenelement (134, 138) mit einer variablen Brennweite, insbesondere mit einer motorisch und/oder elektronisch einstellbaren Brennweite, und/oder eine einstellbare Blende (136), insbesondere eine Blende (136) mit einer elektronisch einstellbaren Öffnung, umfasst,

2. Akusto-optisches Filterelement (114) nach dem vorhergehenden Anspruch, wobei das Raumfilterelement (132) ein Linsenelement (134, 138) umfasst.

3. Akusto-optisches Filterelement (114) nach einem der vorhergehenden Ansprüche, wobei das Raumfilterelement (132) eine Blende (136) umfasst.

4. Akusto-optisches Filterelement (114) nach einem der vorhergehenden Ansprüche, wobei die Blende (136) mindestens eine der folgenden Blenden umfasst: eine Schlitzblende, eine quadratische Blende, eine Rechteckblende, eine Kreisblende, eine Irisblende.

5. Akusto-optisches Filterelement (114) nach einem der vorhergehenden Ansprüche, wobei das Raumfilterelement (132) einen Lichtwellenleiter (144) und ein zwischen einem Ende (146) des Lichtwellenleiters (144) und dem akusto-optischen Kristall (118) angeordnetes Linsenelement (134, 138) umfasst, welches eingerichtet ist, um einen Teil des Ziellichtstrahls in (126) das Ende (146) des Lichtwellenleiters (144) einzukoppeln.

6. Akusto-optisches Filterelement (114) nach dem vorhergehenden Anspruch, wobei der Lichtwellenleiter (144) eine Einmodenfaser umfasst.

7. Akusto-optisches Filterelement (114) nach einem der beiden vorhergehenden Ansprüche, wobei ein Abstand und/oder eine Ausrichtung des Linsenelements (134, 138) relativ zum Ende (146) des Lichtwellenleiters (144) einstellbar ist, vorzugsweise elektronisch einstellbar ist.

8. Akusto-optisches Filterelement (114) nach einem der vorhergehenden Ansprüche, wobei das Raumfilterelement (132) derart eingestellt ist, dass Nebenmaxima einer höheren Ordnung als 2 einer räumlichen Intensitätsverteilung des Ziellichtstrahls (126) unterdrückt werden.

9. Akusto-optisches Filterelement (114) nach dem vorhergehenden Anspruch, wobei zusätzlich Nebenmaxima der 1. Ordnung unterdrückt werden, derart, dass lediglich das Hauptmaximum der räumlichen Intensitätsverteilung des Ziellichtstrahls (126) transmittiert wird.

10. Akusto-optisches Filterelement (114) nach einem der vorhergehenden Ansprüche, weiterhin umfassend eine Kalibrationsvorrichtung (156), wobei die Kalibrationsvorrichtung (156) eine durchstimmbare kohärente Testlichtquelle (158) und einen Detektor (168) umfasst, und wobei die Kalibrationsvorrichtung (156) eingerichtet ist, um mindestens eine der folgenden Kalibrationsprozeduren zur Ermittlung einer Übertragungsfunktion des akusto-optischen Filterelements (114) durchzuführen:

- bei einer festen Hochfrequenz des akustischen Signalgebers (120) wird die Wellenlänge der Testlichtquelle (158) verändert und die Intensität des Ziellichtstrahls (126) gemessen;
- bei einer festen Wellenlänge der Testlichtquelle (158) wird die Hochfrequenz des akustischen Signalgebers (120) verändert und die Intensität des Ziellichtstrahls (126) gemessen.

11. Einstellbare Lichtquelle (110), umfassend eine breitbandige kohärente Lichtquelle (112) sowie ein akusto-optisches Filterelement (114) nach einem der vorhergehenden Ansprüche, wobei die breitbandige kohärente Lichtquelle (112) eingerichtet ist, um den Eingangslichtstrahl (116) des akusto-optischen Filterelements (114) zu erzeugen.

12. Einstellbare Lichtquelle (110) nach dem vorhergehenden Anspruch, wobei die breitbandige kohärente Lichtquelle (112) mindestens eine der folgenden Lichtquellen umfasst: einen breitbandigen Laser, insbesondere einen Weißlichtlaser; mehrere Laserlichtquellen und eine Vorrichtung zur Überlagerung der Strahlen der Laserlichtquellen; einen Lichtwellenleiter mit einer spektral verbreiternden Dotierung und einem Pumplaser, wobei die Dotierung insbesondere eine Seltenerd-Dotierung umfasst, insbesondere eine Dotierung mit Er, Nd, Yb, Ho, und/oder eine Halbleiterdotierung, insbesondere eine Ge-Dotierung; einen spektral verbreiternden Lichtwellenleiter, insbesondere mit einer getaperten Faser, einer mikrostrukturierten Faser, einer photonischen Kristallfaser, einer Holey-Faser, einer photonic-band-gap-Faser.

13. Mikroskop (170) zur Aufnahme von Bildinformationen einer Probe (180), umfassend eine Strahloptik (176, 178, 184) und eine einstellbare Lichtquelle (110) nach einem der beiden vorhergehenden Ansprüche.

14. Mikroskop (170) nach einem der beiden vorhergehenden Ansprüche, wobei das Mikroskop (170) als Konfokalmikroskop ausgestaltet ist und einen Strahlteiler (174) zur Trennung von Anregungslicht und Detektionslicht, wobei der Strahlteiler (174) eine Strahlteiler-Übertragungsfunktion (194) aufweist, wobei die Übertragungsfunktion (194) des akusto-optischen Filterelements (114) der einstellbaren Lichtquelle (110) durch Einstellen des Raumfilterelements (132) derart eingerichtet ist, dass die spektrale Breite des Ziellichtstrahls (126) kleiner ist als die spektrale Breite eines Hauptmaximums der Strahlteiler-Übertragungsfunktion (194).

## Claims

1. Acousto-optic filter element (114), comprising an acousto-optic crystal (118) with an acoustic signal transducer (12p0) for producing acoustic signals in the acousto-optic crystal (118), wherein the acousto-optic crystal (118) is configured, in accordance with a high frequency applied to the acoustic signal transducer (120), to selectively spatially deflect light with a target wavelength from an input light beam (116) entering into the acousto-optic crystal (118) and produce a target light beam (126) with the target wavelength, **characterized by** a spatial filter element (132) arranged in the target light beam (126), wherein the spatial filter element (130) is configured to selectively suppress the intensity of the target light beam (126) in a plane perpendicular to the propagation direction of the target light beam (126) and wherein the spatial filter element (132) comprises a lens element (134, 138) with a variable focal length, in particular with a focal length that is adjustable in a motor-driven and/or electronic manner, and/or an adjustable diaphragm (136), in particular a diaphragm (136) having an electronically adjustable aperture.

2. Acousto-optic filter element (114) according to the preceding claim, wherein the spatial filter element (132) comprises a lens element (134, 138).

3. Acousto-optic filter element (114) according to any one of the preceding claims, wherein the spatial filter element (132) comprises a diaphragm (136).

4. Acousto-optic filter element (114) according to any one of the preceding claims, wherein the diaphragm (132) comprises at least one of the following diaphragms: a slit diaphragm, a square diaphragm, a rectangular diaphragm, a circular diaphragm, an iris diaphragm.

5. Acousto-optic filter element (114) according to any one of the preceding claims, wherein the spatial filter element (132) comprises an optical waveguide (144) and a lens element (134, 138) arranged between an end (146) of the optical waveguide (144) and the acousto-optic crystal (118), said lens element being configured to couple some of the target light beam (126) into the end (146) of the optical waveguide (144).

6. Acousto-optic filter element (114) according to the preceding claim, wherein the optical waveguide (144) comprises a single-mode fibre.

7. Acousto-optic filter element (114) according to either of the two preceding claims, wherein a distance and/or an alignment of the lens element (134, 138) relative to the end (146) of the optical waveguide (144) is adjustable, preferably electronically adjustable.

8. Acousto-optic filter element (114) according to any one of the preceding claims, wherein the spatial filter element (132) is set such that secondary maxima of a spatial intensity distribution of the target light beam (126) of an order higher than 2 are suppressed.

9. Acousto-optic filter element (114) according to the preceding claim, wherein, additionally, secondary maxima of the 1st order are suppressed in such a way that only the primary maximum of the spatial intensity distribution of the target light beam (126) is transmitted.

10. Acousto-optic filter element (114) according to any one of the preceding claims, furthermore comprising a calibration apparatus (156), wherein the calibration apparatus (156) comprises a tuneable coherent test light source (158) and a detector (168) and wherein the calibration apparatus (156) is configured to carry out at least one of the following calibration procedures for ascertaining a transfer function of the acousto-optic filter element (114):

   - the wavelength of the test light source (158) is modified at a fixed high frequency of the acoustic signal transducer (120) and the intensity of the target light beam (126) is measured;
   - the high frequency of the acoustic signal transducer (120) is modified at a fixed wavelength of the test light source (158) and the intensity of the target light beam (126) is measured.

11. Adjustable light source (110), comprising a broadband coherent light source (112) and an acousto-optic filter element (114) according to any one of the preceding claims, wherein the broadband coherent light source (112) is configured to produce the input light beam (116) of the acousto-optic filter element (114).

12. Adjustable light source (110) according to the preceding claim, wherein the broadband coherent light source (112) comprises at least one of the following light sources: a broadband laser, in particular a white light laser; a plurality of laser light sources and an apparatus superimposing the beams of the laser light sources; an optical waveguide with a spectrally broadening doping and a pump laser, wherein the doping comprises, in particular, a rare earth doping, in particular doping with Er, Nd, Yb, Ho, and/or a semiconductor doping, in particular a Ge doping; a spectrally broadening optical waveguide, in particular with a tapered fibre, a microstructured fibre, a photonic crystal fibre, a holey fibre, a photonic band gap fibre.

13. Microscope (170) for recording image information of a sample (180), comprising optics (176, 178, 184) and an adjustable light source (110) according to either of the two preceding claims.

14. Microscope (170) according to either of the two preceding claims, wherein the microscope (170) is configured as a confocal microscope, and a beam splitter (170) for separating excitation light and detection light, wherein the beam splitter (174) has a beam splitter transfer function (194), wherein the transfer function (194) of the acousto-optic filter element (114) of the adjustable light source (110) is configured by setting the spatial filter element (132) in such a way that the spectral width of the target light beam (126) is less than the spectral width of the primary maximum of the beam splitter transfer function (194).

## Revendications

1. Élément filtrant acousto-optique (114), comprenant un cristal acousto-optique (118) doté d'un transmetteur de signal acoustique (12p0) destiné à générer des signaux sonores dans le cristal acousto-optique (118), le cristal acousto-optique (118) étant conçu pour, en fonction d'une haute fréquence appliquée au transmetteur de signal acoustique (120), dévier sélectivement dans l'espace la lumière dans une longueur d'onde cible depuis un rayon lumineux d'entrée (116) qui pénètre dans le cristal acousto-optique (118) et générer un rayon lumineux cible (126) ayant la longueur d'onde cible, **caractérisé par** un élément de filtrage spatial (132) disposé dans le rayon lumineux cible (126), l'élément de filtrage spatial (132) étant configuré pour atténuer sélectivement l'intensité du rayon lumineux cible (126) dans un plan perpendiculaire au sens de propagation du rayon lumineux cible (126), et l'élément de filtrage spatial (132) comportant un élément lentille (134, 138) ayant une distance focale variable, notamment ayant une distance focale réglable de manière motorisée et/ou électronique, et/ou un diaphragme (136) réglable, notamment un diaphragme (136) ayant une ouverture réglable électroniquement.

**2.** Élément filtrant acousto-optique (114) selon la revendication précédente, l'élément de filtrage spatial (132) comportant un élément lentille (134, 138).

**3.** Élément filtrant acousto-optique (114) selon l'une des revendications précédentes, l'élément de filtrage spatial (132) comportant un diaphragme (136).

**4.** Élément filtrant acousto-optique (114) selon l'une des revendications précédentes, le diaphragme (136) comportant au moins l'un des diaphragmes suivants : un diaphragme à fente, un diaphragme quadratique, un diaphragme rectangulaire, un diaphragme circulaire, un diaphragme à iris.

**5.** Élément filtrant acousto-optique (114) selon l'une des revendications précédentes, l'élément de filtrage spatial (132) comportant une fibre optique (144) et un élément lentille (134, 138) disposé entre une extrémité (146) de la fibre optique (144) et le cristal acousto-optique (118), lequel est conçu pour injecter une partie du rayon lumineux cible (126) dans l'extrémité (146) de la fibre optique (144).

**6.** Élément filtrant acousto-optique (114) selon la revendication précédente, la fibre optique (144) comprenant une fibre monomodale.

**7.** Élément filtrant acousto-optique (114) selon l'une des deux revendications précédentes, un écart et/ou une orientation de l'élément lentille (134, 138) par rapport à l'extrémité (146) de la fibre optique (144) étant réglable, de préférence réglable électroniquement.

**8.** Élément filtrant acousto-optique (114) selon l'une des revendications précédentes, l'élément de filtrage spatial (132) étant réglé de telle sorte que les lobes secondaires d'ordre supérieur à 2 d'une distribution dans l'espace de l'intensité du rayon lumineux cible (126) sont atténués.

**9.** Élément filtrant acousto-optique (114) selon la revendication précédente, les lobes secondaires du $1^{er}$ ordre étant en outre atténués de telle sorte que seul le lobe principal de la distribution dans l'espace de l'intensité du rayon lumineux cible (126) est transmis.

**10.** Élément filtrant acousto-optique (114) selon l'une des revendications précédentes, comprenant en outre un dispositif d'étalonnage (156), le dispositif d'étalonnage (156) comportant une source de lumière de test (158) cohérente ajustable et un détecteur (168), le dispositif d'étalonnage (156) étant conçu pour exécuter au moins l'une des procédures d'étalonnage suivantes en vue de déterminer une fonction de transmission de l'élément filtrant acousto-optique (114) :

- à une haute fréquence fixe du transmetteur de signal acoustique (120), la longueur d'onde de la source de lumière de test (158) est modifiée et l'intensité du rayon lumineux cible (126) est mesurée ;
- à une longueur d'onde fixe de la source de lumière de test (158), la haute fréquence du transmetteur de signal acoustique (120) est modifiée et l'intensité du rayon lumineux cible (126) est mesurée.

**11.** Source de lumière réglable (110), comprenant une source de lumière cohérente à large bande (112) ainsi qu'un élément filtrant acousto-optique (114) selon l'une des revendications précédentes, la source de lumière cohérente à large bande (112) étant conçue pour générer le signal lumineux d'entrée (116) de l'élément filtrant acousto-optique (114).

**12.** Source de lumière réglable (110) selon la revendication précédente, la source de lumière cohérente à large bande (112) comprenant au moins l'une des sources de lumière suivantes : un laser à large bande, notamment un laser à lumière blanche ; plusieurs sources de lumière laser et un dispositif servant à superposer les rayons des sources de lumière laser ; une fibre optique ayant un dopage d'élargissement spectral et un laser de pompage, le dopage comprenant notamment un dopage à base de terre rare, notamment un dopage à l'Er, au Nd, à l'Yb, à l'Ho et/ou un dopage semiconducteur, notamment un dopage au Ge ; une fibre optique d'élargissement spectral, notamment une fibre à raccord en queue de rat, une fibre microstructurée, une fibre en cristal photonique, une fibre trouée, une fibre à bande interdite photonique.

**13.** Microscope (170) destiné à enregistrer des informations d'image d'un échantillon (180), comprenant une optique de rayonnement (176, 178, 184) et une source de lumière réglable (110) selon l'une des deux revendications précédentes.

**14.** Microscope (170) selon l'une des deux revendications précédentes, le microscope (170) étant réalisé sous la forme d'un microscope confocal et un séparateur de faisceau (174) destiné à séparer la lumière d'excitation et la lumière de détection, le séparateur de faisceau (174) possédant une fonction de transmission de séparateur de faisceau (194), la fonction de transmission (194) de l'élément filtrant acousto-optique (114) de la source de lumière réglable (110) étant conçue par réglage de l'élément de filtrage spatial (132) de telle sorte que la largeur spectrale du rayon lumineux cible (126) est plus petite que la largeur spectrale d'un lobe principal de la fonction de transmission de séparateur de faisceau (194).

**110**

**114**

**116**

**124**

**Fig. 1**

112

118

120

122

126

$\alpha$

**Fig. 2**

RF

$f_0^{RF}$

$\lambda_0$

$\lambda$

**Fig. 3**

T

**128**

**130**

$\lambda_0, f_0$

$\lambda, f$

110

114

134    136    A    138

112    118

116    126    132    126

**Fig. 4a**

136

134    140

**Fig. 4b
(A)**

142

132

110

114

B

112

118

134

116

126

132

144

**Fig. 5a**

**Fig. 5b
(B)**

134  140  146  148  150

132

142  144

Fig. 6

EP 2 149 070 B1

**Fig. 7**

Fig. 8

**EP 2 149 070 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10115488 A1
- DE 10115509 A1
- US 4084182 A
- US 5377003 A
- JP 2003065850 A
- DE 10115589 A1
- EP 1281997 A2